Europäisches Patentamt

European Patent Office

Office européen des brevets

(19)

(11) **EP 0 771 329 B1**

(12) **EUROPÄISCHE PATENTSCHRIFT**

(45) Veröffentlichungstag und Bekanntmachung des Hinweises auf die Patenterteilung:
06.05.1998 Patentblatt 1998/19

(51) Int Cl.⁶: **C08F 8/28**

(21) Anmeldenummer: 95924789.1

(22) Anmeldetag: 21.07.1995

(86) Internationale Anmeldenummer:
PCT/AT95/00151

(87) Internationale Veröffentlichungsnummer:
WO 96/03443 (08.02.1996 Gazette 1996/07)

(54) **VINYLALKOHOLCOPOLYMERE, DIESE ENTHALTENDE WASSERLÖSLICHE FILME SOWIE DEREN VERWENDUNG ALS VERPACKUNGSMATERIAL**

VINYL ALCOHOL COPOLYMERS, WATER-SOLUBLE FILMS CONTAINING THEM AND THEIR USE AS PACKAGING MATERIAL

COPOLYMERES D'ALCOOL VINYLIQUE, FILMS SOLUBLES DANS L'EAU LES CONTENANT, ET LEUR UTILISATION COMME MATERIAU D'EMBALLAGE

(84) Benannte Vertragsstaaten:
AT BE CH DE DK ES FR GB GR IE IT LI LU MC NL PT SE

(30) Priorität: 21.07.1994 AT 1448/94

(43) Veröffentlichungstag der Anmeldung:
07.05.1997 Patentblatt 1997/19

(73) Patentinhaber: TEICH AKTIENGESELLSCHAFT
3200 Obergrafendorf (AT)

(72) Erfinder:
• HASCHKE, Heinz
A-2542 Kottingbrunn (AT)
• RAUSCH, Ralf
A-1030 Wien (AT)
• REITERER, Franz
A-3052 Innermanzing (AT)
• WEHRMANN, Felix
A-1190 Wien (AT)

(74) Vertreter: **Dungler, Karin**
**Isovolta**
**Österreich. Isolierstoffwerke AG**
**Industriezentrum NÖ-Süd**
**Isovoltastrasse 3**
**2355 Wiener Neudorf (AT)**

(56) Entgegenhaltungen:
EP-A- 0 483 380          DE-A- 1 470 865
DE-A- 1 494 148          DE-A- 2 022 875
GB-A- 889 676            US-A- 3 098 049
US-A- 3 737 398

• CHEMICAL ABSTRACTS, vol. 77, no. 22, 27. November 1972, Columbus, Ohio, US; abstract no. 140697x, YOSHITAKE, TOSHIHIKO 'FORMATION OF HIGHLY HYDROPHILIC DERIVATIVES OF POLY(VINYL ALCOHOL) BY IRRADIATION' Seite 13 ;Spalte 1 ; & NIPPON KAGAKU KAISHA, Bd.8, Nr.7, 1972, JAPAN Seiten 1309 - 1312

**Beschreibung**

Die Erfindung betrifft Vinylalkoholcopolymere, diese enthaltende wasserlösliche Filme, welche vorteilhafterweise als Verpackungsmaterial bzw. Hilfsmittel für Verpackungszwecke verwendet werden können, sowie ein Verfahren zur Herstellung dieser wasserlöslichen Filme, insbesondere solcher mit kontrollierbarer Wasserlöslichkeit.

Stand der Technik

Aus der EP-A2-283180 sind wasserlösliche Filme auf Basis von Polyvinylalkoholen und zwar Vinylalkohol-Vinylacetat-Copolymere, welche teilweise mit Benzaldehydderivaten acetalisiert wurden, vorbekannt. Diese Filme werden durch das an sich bekannte Filmgießverfahren hergestellt, wobei die wäßrige Lösung, bestehend aus dem acetalisierten Polyvinylalkohol mittels einer Düse auf ein bewegtes Trägerband gegossen wird. Anschließend wird der Film in an sich bekannter Weise getrocknet und von dem Trägerband abgezogen. Der auf diese Weise hergestellte wasserlösliche Film eignet sich für das Verpacken von verschiedenen alkalischen und sauren Verpackungsgütern wie beispielsweise Seifen, Reinigungsmitteln oder landwirtschaftlichen bzw. industriellen Chemikalien wie beispielsweise Insektiziden, Herbiziden, Düngemitteln, Detergenzien oder Bleichmitteln.

Diese Filme weisen nun bei ihrer Verwendung als Verpackungsmaterial den Nachteil auf, daß sie im Kontakt mit vielen Verpakkungsgütern insbesondere mit alkalisch oder sauer reagierenden Verbindungen aus Lebensmitteln migrationsfähige toxische Substanzen freisetzen können. Ferner sind derartige Filme, welche ausschließlich aus synthetischen Polymeren bestehen, aufgrund ihrer chemischen Konstitution nur schwer biologisch abbaubar.

Aus der EP-A- 304 401 ist es bekannt, Formkörper insbesondere Folien aus destrukturierter Stärke herzustellen. Obwohl es sich in diesem Fall um ein aus Naturstoffen bestehendes Polymer handelt, kann dieses zwar biologisch abgebaut werden, jedoch nur mit relativ niedriger Abbaugeschwindigkeit. Dadurch sind derartige Filme nur innerhalb langer Zeiträume auf biologischem Weg zu entsorgen.

Ferner beschreibt die US-PS 3 316 190 kaltwasserlösliche, im wesentlichen aus Polyvinylalkohol bestehenden Mischungen, welche durch Vermischen von (a) Polyvinylalkoholen oder aus diesen hergestellten Acetalen, mit (b) Tensiden und (c) gegebenfalls auch wasserlöslicher Stärke erhalten werden. In diesen Mischungen trägt die Stärkekomponente nicht zur biologischen Abbaubarkeit, sondern lediglich zur Vermeidung von Restklebrigkeit der aus dieser Mischung hergestellten Filme bei.

Ebenso sind aus der DE-A-2022875 Mischungen aus Polyvinylalkohol und Stärke vorbekannt, welche zur Herstellung von porösen Polyvinylacetat-Gegenständen eingesetzt werden.

Aus der US-A-3,737,398 sind Formalin-Dialdehydstärke-Polyvinylalkohole vorbekannt, welche zur Oberflächenbehandlung von Metallgegenständen eingesetzt werden.

Ferner sind aus der US-A-3,098,049 Reaktionsprodukte vorbekannt, welche durch Umsetzung von hydrolysierten Polyvinylacetatpolymeren mit Periodat-oxidierten Polysacchariden entstehen. Diese Reaktionsprodukte zeichnen sich durch hohe Wasserbeständigkeit aus, das heißt sie sind als wasserunlöslich zu bezeichnen.

Ferner ist es bekannt, anstelle von Folien als Verpackungsmaterial Glasgefäße mit Verschlüssen beispielsweise aus Metallfolien zu verwenden. Dabei werden die Metallfolien mittels Lacksiegelung an den Glasgefäßen angebracht.

Bei der Wiederverwertung der Glasgefäße sollen die Siegellackreste leicht zu entfernen sein. Dies wird jedoch in den meisten Fällen durch den verwendeten Siegellack aufgrund dessen geringer Wasserlöslichkeit verhindert.

Darstellung der Erfindung

Aufgabe der Erfindung ist es daher, polymere Verpackungsmaterialien anzugeben, die rasch biologisch abbaubar sind und gleichzeitig die an Verpackungsmaterialien gestellten Anforderungen wie ausreichende Reißfestigkeit und/ oder eine regulierbare Wasserlöslichkeit im Fall von Verpackungshilfsmitteln wie Siegellacken oder Verpackungsfolien erfüllen.

Erfindungsgemäß wird ein Vinylalkoholcopolymer vorgeschlagen, welches durch säurekatalysierte Acetalisierungsreaktion von Polyvinylalkoholen mit einem Verseifungsgrad von 88 - 99,5 Mol%, vorzugsweise zwischen 88 und 99 Mol%, mit Carbonylgruppen bzw. präsumtive Carbonylgruppen enthaltenden Naturstoffen oder deren Derivaten herstellbar ist.

Vorzugsweise werden Vinylalkoholcopolymere eingesetzt, deren Verseifungsgrad zwischen 90 und 99 Mol% ist.

Als Carbonylgruppen enthaltende Naturstoffe bzw. Naturstoff-Derivate bzw. -Abbauprodukte werden solche angesehen, welche reaktionsfähige Aldehyd- bzw. Ketogruppen aufweisen. Als präsumtive Carbonylgruppen enthaltende Naturstoffe gelten solche, welche unter säurekatalysierten Acetalisierungsbedingungen funktionelle Gruppen ausbilden, die die für Aldehyd- und Ketogruppen typischen Reaktionen zeigen wie beispielsweise die Oximbildung mit Hydroxylaminen.

Als Naturstoff-Abbauprodukte kommen solche Produkte in Frage, welche aus Naturstoffen durch oxidativen oder hydrolytischen, gegebenenfalls unter Säure- oder Basen katalysierten Abbau entstehen und welche die vorgenannten Merkmale der Carbonylgruppen oder präsumtiven Carbonylgruppen aufweisen. Zu dieser Gruppe gehören beispielsweise die wasserlöslichen Fraktionen hydrolytisch abgebauter und/oder mechanisch-thermisch abgebauter Stärkeprodukte wie beispielsweise von Kartoffel- oder Reisstärke.

Als Naturstoff-Derivate eignen sich ferner wasserlösliche Fraktionen von oxidativen oder hydrolytischen Abbauprodukten von Stärke, aber auch Naturstoffe.

Als Naturstoffe eignen sich vorzugsweise Monosaccharide wie Aldosen.

Ferner eignen sich auch Ketosen wie Fructose zur Herstellung der erfindungsgemäßen Vinylalkoholpolymeren sowie Di- und Trisaccharide, vorzugsweise des reduzierenden "Ose-Typs" wie beispielsweise Maltose. Ferner eignen sich Polysaccharide wie Glycogen, Stärke oder Pektine, Hyaluronsäure sowie deren hydrolytische oder oxidative Abbauprodukte.

Insbesondere eignet sich ein Polysaccharid, welches ein aus Stärke durch Säurekatalyse hergestelltes, partiell hydrolysiertes Abbauprodukt mit verringertem Molekulargewicht ist.

Ferner kann das Polysaccharid ein aus Stärke durch Oxidationsreaktion hergestelltes, partielles Abbauprodukt sein. Diese Oxidationsreaktion wird vorzugsweise mittels Wasserstoffperoxid durchgeführt.

Vorzugsweise ist das Polysaccharid ein aus Stärke durch thermische und mechanische Belastung und dadurch eingeleitete Entknäulung der Stärkemoleküle sowie durch Spaltung von Vernetzungsbrücken und partieller Dehydratation bzw. Brenz-Reaktionen hergestelltes Stärke-Abbauprodukt. Zusätzlich kann durch chemisch-hydrolytischen Abbau in Anwesenheit saurer oder alkalischer Katalysatoren der Stärkeabbau auf maximal die Hälfte des ursprünglichen, durchschnittlichen Molekulargewichtes der eingesetzten Stärke erzielt werden.

Erfindungsgemäß wird ein Verfahren zur Herstellung von Vinylalkoholcopolymeren, angegeben, welches dadurch gekennzeichnet ist, daß das Vinylalkoholcopolymer aus einem Polyvinylalkohol mit einem Verseifungsgrad von 80 - 99,5 Mol%, vorzugsweise zwischen 88 und 99,5 Mol%, durch säurekatalysierte Acetalisierungsreaktion mit einem Carbonylgruppen bzw. präsumtive Carbonylgruppen enthaltenden Naturstoff oder dessen Derivat hergestellt wird.

Als Säurekatalysatoren für die Umsetzung des Polyvinylalkohols mit den Carbonylgruppen enthaltenden, bzw. präsumtive Carbonylgruppen enthaltenden Naturstoffe, bzw. Naturstoff-Derivaten, bzw. -Abbauprodukten kommen Mineralsäuren wie HCl, $H_3PO_4$, aber auch Schwefelsäure sowie die üblicherweise als Katalysatoren für Veresterungsreaktionen oder für Acetalisierungsreaktionen eingesetzten starken organischen Säuren wie p-Toluol-Sulfonsäure in Frage. Oxidierende Säuren wie $HNO_3$ werden besonders dann eingesetzt, wenn ein oxidativer Abbau des eingesetzten Naturstoffes gewünscht ist. Bei höheren Reaktionstemperaturen eignen sich als Katalysatoren schwache organische Säuren wie Ascorbinsäure oder Benzoesäure.

Zufriedenstellende Umsetzungsgrade bei der Acetalisierungsreaktion werden bei Reaktionstemperaturen zwischen 70 und 90°C unter Katalysierung durch starke Mineralsäuren wie $H_3PO_4$ innerhalb von mehrstündigen Reaktionszeiten erzielt. Bei Ausführung der Acetalisierungs-Reaktionen unter Druck können diese Reaktionszeiten entsprechend verkürzt werden. Auf diese Weise kann vorteilhafterweise ein Granulat, bestehend aus dem erfindungsgemäßen Vinylalkoholcopolymer, hergestellt werden, bei welchem entsprechend der Extruderdüsenform ein Stranggranulat erhalten werden kann. In diesem Falle ist es möglich, das Stranggranulat unneutralisiert herzustellen.

Als Katalysatoren für diese Art der Umsetzung werden Phosphorsäure, p-Toluolsulfonsäure, Benzoesäure, Ascorbinsäure, Zitronensäure oder Weinsäure eingesetzt.

Erfindungsgemäß wird ein wasserlöslicher Film vorgeschlagen, dessen Löslichkeitsverhalten bei Temperaturen ab maximal 60 bis 80°C dadurch einstellbar ist, daß der Film aus einem Polyvinylalkohol mit einem mittleren Polymerisationsgrad in einem Bereich von 500 bis 2800 durch säurekatalysierte Reaktion mit einem Carbonylgruppen enthaltenden Naturstoff, dessen Anzahl an Carbonyläquivalenten pro 100 Vinylalkoholäquivalente des Polyvinylalkohols der Formel

$$\frac{\text{Verseifungsgrad (Mol\%) PVA}}{2} - (47.6 \text{ bis } 49)$$

entspricht.

Ferner wird erfindungsgemäß ein wasserlöslicher Film vorgeschlagen, dessen Löslichkeitsverhalten bei Temperaturen ab maximal 40 bis 60°C dadurch einstellbar ist, daß der Film aus einem Polyvinylalkohol mit einem mittleren Polymerisationsgrad in einem Bereich von 300 bis 1500 durch säurekatalysierte Reaktion mit einem Carbonylgruppen enthaltenden Naturstoff, dessen Anzahl an Carbonyläquivalenten pro 100 Vinylalkoholäquivalente des Polyvinylalkohols der Formel

$$\frac{\text{Verseifungsgrad (Mol\%) PVA}}{2} - (44 \text{ bis } 47.5)$$

entspricht, herstellbar ist.

Ein weiterer Vorteil des erfindungsgemäßen wasserlöslichen Films, dessen Löslichkeitsverhalten bei Temperaturen ab maximal 20 bis 40°C dadurch einstellbar ist, besteht darin, daß der wasserlösliche Film aus einem Polyvinylalkohol mit einem mittleren Polymerisationsgrad in einem Bereich von 200 bis 2700 durch säurekatalysierte Reaktion mit einem Carbonylgruppen enthaltenden Naturstoff, dessen Anzahl an Carbonyläquivalenten pro 100 Vinylalkoholäquivalente des Polyvinylalkohols der Formel

$$\frac{\text{Verseifungsgrad (Mol\%) PVA}}{2} - (40 \text{ bis } 44)$$

entspricht, herstellbar ist.

Eine weitere Variante des erfindungsgemäßen Films hat den Vorteil, daß der wasserlösliche Film durch säurekatalysierte Acetalisierung eines Polyvinylalkohols mit einem Polymerisationsgrad im Bereich von 200 bis 1000 mit einem Naturstoff, dessen Carbonyläquivalente entsprechend der Formel

$$\frac{\text{Verseifungsgrad (Mol\%) PVA}}{2} - (42.5 \text{ bis } 44)$$

eingestellt werden können, herstellbar ist.

Diese Filme werden mit kontrollierbarer Wasserlöslichkeit dadurch hergestellt, daß bei der Umsetzung des Polyvinylalkohols mit einem Carbonylgruppen- bzw. präsumtive Carbonylgruppen enthaltenden Naturstoff bzw. Naturstoff-Derivat sowohl die Anzahl der eingesetzten Carbonyläquivalente des Naturstoffs pro Anzahl der freien Hydroxylgruppen im Polyvinylalkohol als auch der Polymerisationsgrad des eingesetzten Polyvinylalkohols je nach gewünschter Lösungstemperatur des Films im Wasser eingestellt werden können. Durch diese Einstellung kann der Kompromiß zwischen biologischer Abbaubarkeit und den gewünschten physikalischen Eigenschaften, insbesondere der Temperatur, ab welcher die Filme bei Erwärmung spätestens wasserlöslich sind, erzielt werden.

Ferner betrifft die Erfindung ein Verfahren zur Herstellung eines wasserlöslichen Films, das dadurch gekennzeichnet ist, daß das Vinylalkoholcopolymer mit an sich bekannten Hydrophilierungsmitteln und Weichmachern in Granulatform versetzt wird und dieses Gemisch anschließend in einen Extruder übergeführt wird, in welchem es auf Fließtemperatur erhitzt und anschließend in geschmolzener Form einer Extruderaustrittsdüse zugeführt wird, wodurch ein Film oder Filmschlauch ausgebildet wird.

Eine weitere Variante des erfindungemäßen Verfahrens zur Herstellung des wasserlöslichen hat den Vorteil, daß das Vinylalkoholcopolymer in einem Extruder durch Umsetzung der Reaktionskomponenten Polyvinylalkohol, Carbonylgruppen enthaltenden Naturstoffen oder deren Derivaten unter Säurekatalyse hergestellt und in demselben Extruder in Gegenwart an sich bekannter Plastifizierungsmittel und Additive einer Extruderaustrittsdüse zugeführt wird, sodaß ein Film oder Filmschlauch ausgebildet wird.

Ein weiterer Vorteil des erfindungsgemäßen Verfahrens zur Herstellung eines wasserlöslichen Films ist, daß ein Extruder mit Entgasungsstrecke zur Entfernung des im Granulierungsprozess entstehenden Wasserdampfes verwendet wird.

Zur optimalen Einstellung des Wasserlöslichkeitsverhaltens können auch Gemische von Polyvinalalkoholen verschiedener Polymerisations- und Verseifungsgrade in das erfindungsgemäße Verfahren eingesetzt werden.

Dies ist insbesondere deshalb wichtig, da - je nach Anwendungsgebiet - nicht immer in kaltem Wasser lösliche Filme gewünscht werden.

Zur Einstellung der erfindungsgemäßen stöchiometrischen Verhältnisse der Reaktanden kann das Carbonyläquivalent des eingesetzten Naturstoffes bei bekannter chemischen Formel aus dem Molekulargewicht dividiert durch die Anzahl der vorhandenen oder präsumtiven Carbonylgruppen berechnet werden .

Ferner kann in den Fällen, in denen die Zahl der präsumtiven Carbonylgruppen nicht aus der chemischen Formel des Naturstoffes vorhergesagt werden kann, wie beispielsweise im Fall von Stärke bzw. von deren Abbauprodukten das Carbonyläquivalent mittels eines Vergleichsversuches unter Reaktionsbedingungen, jedoch ohne Polyvinylalkohol und nachträglicher Probennahme durch "Oxim-Titration" nach H.Schulz, Fauth und Kern; Makromol.Chem. 20 (1956) 161 bestimmt werden.

Unter Vinylalkohol-Äquivalent wird das mittlere Molekulargewicht des eingesetzten Polyvinylalkohols pro Vinyleinheit, dividiert durch ein Hundertstel des prozentualen Verseifungsgrades verstanden.

Ferner betrifft die Erfindung die Verwendung eines wasserlöslichen Films für Verpackungsmaterialien.

Die Vinylalkoholcopolymere werden erfindungsgemäß zur Herstellung von Siegellacken verwendet oder in Gemischen mit bekannten polymeren Heißsiegellack-Komponenten, insbesondere wäßrigen Polyacrylat-Dispersionen.

Die Erfindung betrifft ferner ein Verfahren zur Herstellung eines Granulates auf Basis eines Vinylalkoholcopolymers, welches dadurch gekennzeichnet ist, daß die säurekatalysierte Umsetzung des Vinylalkoholcopolymers mit Carbonylgruppen bzw. präsumtive Carbonylgruppen enthaltenden Naturstoffen in einem Extruder durchgeführt wird, sodaß entsprechend der Extruderdüsenform ein Granulat, insbesondere ein Stranggranulat hergestellt wird.

Einige Wege zur Ausführung der Erfindung

Die Erfindung wird anhand folgender Beispiele näher erläutert: Kaltwasserlöslicher Film.

Beispiel 1:

In einem 1l 3-Halskolben, ausgestattet mit Rührer, Rückflußkühler, Pulver-Eintragevorrichtung und Tropftrichter wurde eine Lösung von 100 g Polyvinylalkohol (PVA) vom "MOWIOL® Typ 4-98" der Firma HÖCHST mit einem Polymerisationsgrad von 600 und einem Verseifungsgrad von 98,4 Mol-% in 600 ml destilliertem Wasser vorgelegt.

Der Polyvinylalkohol weist ein Vinylalkoholäquivalent von 45,45 entsprechend der Formel

$$\frac{(44{,}05 \times 0{,}984 + 86{,}09 \times (1\text{-}0{,}984))}{0{,}984}$$

auf, worin das Molekulargewicht der Vinylalkoholeinheiten $M_{VA} = 44{,}05$ und jenes der Vinylacetateinheiten $M_{VAc} = 86{,}09$ bedeuten. Die vorgelegte Menge an Polyvinylalkohol weist daher $\frac{100}{45{,}5} = 2{,}2$ Vinylalkoholäquivalente auf.

Der Polyvinylalkohol wird in der Folge mit Vanillin als Carbonylgruppen enthaltender Naturstoff umgesetzt, dessen Molekulargewicht 152 ist.

Entsprechend der Formel

$$\frac{\text{Verseifungsgrad (Mol\%) Polyvinylalkohol}}{2} - (40 \text{ bis } 44)$$

soll die Anzahl der Carbonyläquivalente im Bereich von 5.2 bis 9.2 und somit im Bereich von

$$\frac{98.4}{2} - (40 \text{ bis } 44) = 9{,}2 \text{ bis } 5{,}2 \text{ pro } 100 \text{ Vinyläquivalente}$$

liegen.

Für die Durchführung des Versuches wird die Anzahl der Carbonyläquivalente somit aus diesem Bereich mit 6,6 pro 100 Vinylalkoholäquivalente angenommen, was bei 2,2 Vinyläquivalenten 0,145 Carbonyläquivalenten entspricht. Dieser Wert multipliziert mit dem Molekulargewicht von 152 ergibt die einzusetzende Menge an Vanillin von 22g. Die Polyvinylalkohol-Lösung der eingangs genannten Art wird nun auf 40°C erwärmt und unter Rühren mit 22g pulverförmigem Vanillin versetzt. Anschließend wird mittels des Eintropftrichters langsam eine Lösung von 3g 85%-iger Phosphorsäure in 50 ml destilliertem Wasser zugegeben.

Die Reaktionsmischung wurde unter ständigem Rühren auf 70°C erwärmt und 5 Stunden bei dieser Temperatur gehalten. Anschließend wird die Reaktionsmischung unter Rühren auf Raumtemperatur abgekühlt und noch 20 Stunden unter Rühren bei dieser Temperatur reagieren gelassen.

Das Reaktionsgemisch wurde vorsichtig mit verdünnter NaOH neutralisiert und dann in einen großen Überschuß von Aceton tropfenweise eingegossen, wobei das Vinylalkoholcopolymer als Niederschlag ausfällt.

Zur Entfernung eines eventuell nichtreagierten Restanteils an Vanillin wird eine Charge des frisch gefällten Vinylalkoholcopolymers mit Wasserdampf destilliert. Das entfernte Vanillin kann auf diese Weise wiedergewonnen werden.

Das gereinigte Vinylalkoholcopolymer sowie die übrige Charge in Form des nicht destillierten Rohproduktes werden wie folgt zu Filmen gegossen:

Beide Chargen werden jeweils in Wasser gelöst und nach Zugabe geringer Mengen Glycerin zur Einstellung der Filmeigenschaften auf eine Glasplatte aufgegossen und bei ca. 80°C zum Film getrocknet. Die Filme hatten einen Acetalisierungsgrad von 13 Mol-% (d.s. umgesetzte 6,5 Carbonyläquivalente pro 100 Vinylalkoholäquivalente) und ließen sich in Stärken von 22 bzw. 28 μm von der Glasplatte abziehen.

In Wasser bei einer Temperatur von 20°C lösten sich die Filme unter Rühren innerhalb von 1 Minute.

Im "geschlossene Flaschen-Test" nach W.K. Fischer*) zur Bestimmung der biologischen Abbaubarkeit zeigten die Filme eine Sauerstoffzehrung nach 30 Tagen bei 20°C entsprechend 43% des theoretischen, biologischen Sauerstoffbedarfes (BSBT).

Dieser Versuch zeigt, daß das Vinylalkoholcopolymer sowohl in gereinigter als auch in ungereinigter Form zu Filmen gegossen werden kann, ohne dabei die Eigenschaften des Films wesentlich zu beeinträchtigen.

Beispiel 2:

Warmwasserlöslicher Film.

100g Polyvinylalkohol mit einem Polymerisationsgrad von 1700 und einem Verseifungsgrad von 98,5%, somit entsprechend 2,2 Vinylalkoholäquivalenten (VA-Äqu) werden wie in Beispiel 1 angegeben mit 12g Vanillin (Molekulargwicht = 152), also mit 12/152 = 0,08 Carbonyläquivalenten [Carb-Äqu] umgesetzt.

Das Mengenverhältnis Carb-Äqu:VA-Äqu wurde entsprechend der Formel

$$\frac{\text{Verseifungsgrad (Mol\%) PVA}}{2} - 45 \text{ zu } 3,6 \text{ pro } 100 \text{ VA-Äqu}$$

eingestellt.

Der aus dem Vinylalkoholpolyomer hergestellte Film (Dicke 30μm) hatte einen Acetalisierungsgrad von 7 Mol-% und eine Reißfestigkeit von 25 MPa. In Wasser bei einer Temperatur von 60°C löste sich der Film unter Rühren innerhalb von 2 min.

Im "geschlossene Flaschen-Test" zur Bestimmung der biologischen Abbaubarkeit nach Fischer zeigt die Sauerstoffzehrung nach 30 Tagen bei 20°C 43% BSBT.

Beispiel 3:

Warmwasserlöslicher Film.

100g Polyvinylalkohol mit einem Polymerisationsgrad von 1400 und einem Verseifungsgrad von 98,5%, somit entsprechend 2,2 Vinylalkoholäquivalenten (VA-Äqu) werden wie in Beispiel 1 angegeben mit 12g Glucose (Molekulargwicht = 180), also mit 12/180 = 0,07 Carbonyläquivalenten [Carb-Äqu] umgesetzt.

Das Mengenverhältnis Carb-Äqu:VA-Äqu wurde entsprechend der Formel

$$\frac{\text{Verseifungsgrad (Mol\%) Polyvinylalkohol}}{2} - 46,2 = 3,0/100 \text{ VA-Äqu}$$

eingestellt.

Der Film hat einen Acetalisierungsgrad von 5,5 Mol-%. In Wasser bei einer Temperatur von 60°C löste sich der Film unter Rühren innerhalb von 3 min.

Im "geschlossene Flaschen-Test" zur Bestimmung der biologischen Abbaubarkeit nach Fischer*) zeigte die Sauerstoffzehrung nach 30 Tagen bei 20°C 49% BSBT.

Beispiel 4:

Heißwasserlöslicher Film.

100g Polyvinylalkohol mit einem Polymerisationsgrad von 1800 und einem Verseifungsgrad von 98,5%, somit entsprechend 2,2 Vinylalkoholäquivalenten (VA-Äqu) werden wie in Beispiel 1 angegeben mit 5g Glucose (Molekulargwicht = 180), also mit 5/180 = 0,03 Carbonyläquivalenten [Carb-Äqu] umgesetzt.

Das Mengenverhältnis Carb-Äqu:VA-Äqu wurde entsprechend der Formel

$$\frac{\text{Verseifungsgrad (Mol\%) Polyvinylalkohol}}{2} - 48 = 1,3/100 \text{ VA-Äqu}$$

eingestellt.

Der Film hatte einen Acetalisierungsgrad von 2,0 Mol-%. In Wasser bei einer Temperatur von 95°C löste sich der Film unter Rühren innerhalb von 5 min.

Im "geschlossene Flaschen-Test" zur Bestimmung der biologischen Abbaubarkeit nach Fischer*) zeigte die Sauerstoffzehrung nach 30 Tagen bei 20°C 44% BSBT.

Beispiel 5:

Kaltwasserlöslicher Film.

100g Polyvinylalkohol mit einem Polymerisationsgrad von 1000 und einem Verseifungsgrad von 98,5%, somit entsprechend 2,2 Vinylalkoholäquivalenten (VA-Äqu) werden wie in Beispiel 1 angegeben mit 33g Glucoronsäure-Na-Salz (Molekulargwicht = 216), also mit 33/216 = 0,15 Carbonyläquivalenten [Carb-Äqu] umgesetzt.

Das Mengenverhältnis Carb-Äqu:VA-Äqu wurde entsprechend der Formel

$$\frac{\text{Verseifungsgrad (Mol\%) Polyvinylalkohol}}{2} - 42{,}3 = 6{,}9 \text{ /100 VA-Äqu}$$

eingestellt.

Der Film hatte einen Acetalisierungsgrad von 14 Mol-%. In Wasser bei einer Temperatur von 25°C löst sich der Film unter Rühren innerhalb von 2 min.

Im "geschlossene Flaschen-Test" zur Bestimmung der biologischen Abbaubarkeit nach Fischer*) zeigte die Sauerstoffzehrung nach 30 Tagen bei 20°C 44% BSBT.

Beispiel 6:

Heißwasserlöslicher Film.

100g Polyvinylalkohol mit einem Polymerisationsgrad von 2800 und einem Verseifungsgrad von 98,5%, somit entsprechend 2,2 Vinylalkoholäquivalenten (VA-Äqu) werden wie in Beispiel 1 angegeben mit 8g Glucoronsäure-Na-Salz (Molekulargwicht = 216), also mit 8/216 = 0,04 Carbonyläquivalenten [Carb-Äqu] umgesetzt.

Das Mengenverhältnis Carb-Äqu:VA-Äqu wurde entsprechend der Formel

$$\frac{\text{Verseifungsgrad (Mol\%) Polyvinylalkohol}}{2} - 47{,}6 = 1{,}7 \text{ /100 VA-Äqu}$$

eingestellt.

Der Film hatte einen Acetalisierungsgrad von 3 Mol-%. In Wasser bei einer Temperatur von 95°C löste sich der Film unter Rühren innerhalb von 10 min.

Im "geschlossene Flaschen-Test" zur Bestimmung der biologischen Abbaubarkeit nach Fischer*) zeigte die Sauerstoffzehrung nach 30 Tagen bei 20°C 40% BSBT.

Beispiel 7:

Warmwasserlöslicher Film.

100g Polyvinylalkohol mit einem Polymerisationsgrad von 1100 und einem Verseifungsgrad von 98,5%, somit entsprechend 2,2 Vinylalkoholäquivalenten (VA-Äqu) werden wie in Beispiel 1 angegeben mit 25g Maltose (Molekulargwicht = 342), also mit 25/342 = 0,07 Carbonyläquivalenten [Carb-Äqu] umgesetzt.

Das Mengenverhältnis Carb-Äqu:VA-Äqu wurde entsprechend der Formel

$$\frac{\text{Verseifungsgrad (Mol\%) Polyvinylalkohol}}{2} - 45{,}9 = 3{,}3 \text{ /100 VA-Äqu}$$

eingestellt.

Der Film hatte einen Acetalisierungsgrad von 6,0 Mol-%. In Wasser bei einer Temperatur von 50°C löst sich der Film unter Rühren innerhalb von 5 min.

Im "geschlossene Flaschen-Test" zur Bestimmung der biologischen Abbaubarkeit nach Fischer*) zeigte die Sauerstoffzehrung nach 30 Tagen bei 20°C 44% BSBT.

Beispiel 8/8a:

Heißwasserlöslicher Film.

100g Polyvinylalkohol mit einem Polymerisationsgrad von 1400 und einem Verseifungsgrad von 98,5%, somit entsprechend 2,2 Vinylalkoholäquivalenten (VA-Äqu) werden wie in Beispiel 1 angegeben mit 15g Maltose (Molekulargwicht = 342), also mit 15/342 = 0,04 Carbonyläquivalenten [Carb-Äqu] umgesetzt.

Das Mengenverhältnis Carb-Äqu:VA-Äqu wurde entsprechend der Formel

$$\frac{\text{Verseifungsgrad (Mol\%) Polyvinylalkohol}}{2} - 47{,}3 = 2{,}0 \text{ /100 VA-Äqu}$$

eingestellt.

In Abweichung zur Filmherstellungsmethode gemäß Beispiel 1 wird das Reaktionsgemisch nach der Acetalisierungsreaktion und Neutralisation im Vakuum durch Abdampfen von ca. 300 g Wasser bis auf einen Feststoffgehalt (Bestimmung durch Trocknung im Trockenschrank bei 120°C) von 30% eingeengt. Es ergibt sich eine Viskosität des Gemisches von 35.000 mPa.s bei 20°C. Dann werden 200 g Glycerin zugegeben und die Mischung im Vakuum bei 60°C so lange gerührt, bis zuerst eine Gelphase und anschließend ein Granulat entsteht.

In einem weiteren Versuch (= Beispiel 8a) wird dieser Granulierungsvorgang noch dadurch beschleunigt, daß nach der Glycerin-Zugabe 10 g pulverförmige, handelsübliche Carboxymethylcellulose zugegeben wurden. Das so erhaltene Granulat wird in einen Blasextruder mit Entgasungs-Mittelstrecke bei 235°C Anfangs-Temperatur für die Extrusion und anschließend mit fallender Temperatur bis zur Extruder-Austrittsdüse ($T_{Austr}$ = 170°C) zu einem Film-Schlauch extrudiert.

Der Film hatte einen Acetalisierungsgrad von 3,0 Mol-%. In Wasser bei einer Temperatur von 60°C löst sich der Film unter Rühren innerhalb von 5 min.

Im "geschlossene Flaschen-Test" zur Bestimmung der biologischen Abbaubarkeit nach Fischer*) zeigte die Sauerstoffzehrung nach 30 Tagen bei 20°C 49% BSBT.

Beispiel 9:

Kaltwasserlöslicher Film.

100g Polyvinylalkohol mit einem Polymerisationsgrad von 700 und einem Verseifungsgrad von 98,5%, somit entsprechend 2,2 Vinylalkoholäquivalenten (VA-Äqu) werden wie in Beispiel 1 angegeben mit 65g Maltose (Molekulargwicht = 342), also mit 65/342 = 0,19 Carbonyläquivalenten [Carb-Äqu] umgesetzt.

Das Mengenverhältnis Carb-Äqu:VA-Äqu wurde entsprechend der Formel

$$\frac{\text{Verseifungsgrad (Mol\%) Polyvinylalkohol}}{2} - 40,65 = 8,6/100 \text{ VA-Äqu}$$

eingestellt.

Anschließend wurde keine Ausfällung mit Aceton durchgeführt, sondern es wurde nach der Reaktion und Neutralisation bis auf eine Viskosität von 35.000 mPa.s eingeengt. Das Reaktionsgemisch wurde auf eine Glasplatte aufgerakelt. Die "Lackschicht" auf der Glasplatte wurde bei 80°C im Umlufttrockenschrank getrocknet. Danach konnte ein Film der Stärke 100 µm abgzogen werden.

Der Film hatte einen Acetalisierungsgrad von 15 Mol-%. In Wasser bei einer Temperatur von 95°C löst sich der Film unter Rühren innerhalb von 5 min.

Im "geschlossene Flaschen-Test" zur Bestimmung der biologischen Abbaubarkeit nach Fischer*) zeigte die Sauerstoffzehrung nach 30 Tagen bei 20°C 59% BSBT.

Beispiel 10:

Kalt/Warmwasserlöslicher Film.

100g Polyvinylalkohol einer MOWIOL®-Type mit einem Polymerisationsgrad von 1100 und einem Verseifungsgrad von 91 %, somit entsprechend 1,9 Vinylalkoholäquivalenten (VA-Äqu) werden wie in Beispiel 1 angegeben mit 4g Vanillin (Molekulargewicht = 152), also mit 4/152 = 0,03 Carbonyläquivalenten [Carb-Äqu] umgesetzt.

Das Mengenverhältnis Carb-Äqu:VA-Äqu wurde entsprechend der Formel

$$\frac{\text{Verseifungsgrad (Mol\%) Polyvinylalkohol}}{2} - 44,1 = 1,4 /100 \text{ VA-Äqu}$$

eingestellt.

Der Film hatte einen Acetalisierungsgrad von 2,5 Mol-%. In Wasser bei einer Temperatur von 60°C löst sich der Film unter Rühren innerhalb von 3 min.

Im "geschlossene Flaschen-Test" zur Bestimmung der biologischen Abbaubarkeit nach Fischer*) zeigte die Sauerstoffzehrung nach 30 Tagen bei 20°C 43% BSBT.

Beispiel 11:

Kaltwasserlöslicher Film.

100g Polyvinylalkohol mit einem Polymerisationsgrad von 1100 und einem Verseifungsgrad von 91%, somit entsprechend 1,9 Vinylalkoholäquivalenten (VA-Äqu) werden wie in Beispiel 1 angegeben mit 10g Glucose (Molekulargwicht = 180), also mit 10/180 = 0,06 Carbonyläquivalenten [Carb-Äqu] umgesetzt.

Das Mengenverhältnis Carb-Äqu:VA-Äqu wurde entsprechend der Formel

$$\frac{\text{Verseifungsgrad (Mol\%) Polyvinylalkohol}}{2} - 42,6 = 2,9/100 \text{ VA-Äqu}$$

eingestellt.

Der Film hatte einen Acetalisierungsgrad von 5,0 Mol-%. In Wasser bei einer Temperatur von 22°C löst sich der Film unter Rührung innerhalb von 3 min.

Im "geschlossene Flaschen-Test" zur Bestimmung der biologischen Abbaubarkeit nach Fischer*) zeigte die Sauerstoffzehrung nach 30 Tagen bei 20°C 45% BSBT.

Beispiel 12:

Kaltwasserlöslicher Film

100g Polyvinylalkohol vom "MOWIOL® Typ 18-88" der Firma HOECHST, mit einem Polymerisationsgrad von 2700 und einem Verseifungsgrad von 88%, somit entsprechend 1,8 Vinylalkoholäquivalenten (VA-Äqu) werden wie in Beispiel 1 angegeben mit 5g Vanillin (Molekulargwicht = 152), also mit 5/152 = 0,03 Carbonyläquivalenten [Carb-Äqu] umgesetzt.

Das Mengenverhältnis Carb-Aqu:VA-Aqu wurde entsprechend der Formel

$$\frac{\text{Verseifungsgrad (Mol\%) Polyvinylalkohol}}{2} - 42,2 = 1,8/100 \text{ VA-Äqu}$$

eingestellt.

Der Film hatte einen Acetalisierungsgrad von 3,5 Mol-%. In Wasser bei einer Temperatur von 60°C löste sich der Film unter Rühren innerhalb von 5 min.

Im "geschlossene Flaschen-Test" zur Bestimmung der biologischen Abbaubarkeit nach Fischer*) zeigte die Sauerstoffzehrung nach 30 Tagen bei 20°C 43% BSBT.

Beispiel 13:

Kaltwasserlöslicher Film.

100g Polyvinylalkohol mit einem Polymerisationsgrad von 1100 und einem Verseifungsgrad von 81 %, somit entsprechend 1,56 Vinylalkoholäquivalenten (VA-Äqu) werden wie in Beispiel 1 angegeben mit 3g Maltose (Molekulargwicht = 342), also mit 3/342 = 0,01 Carbonyläquivalenten [Carb-Äqu] umgesetzt.

Das Mengenverhältnis Carb-Äqu zu VA-Äqu wurde entsprechend der Formel

$$\frac{\text{Verseifungsgrad (Mol\%) Polyvinylalkohol}}{2} - 40 = 0,6/100 \text{ VA-Äqu}$$

eingestellt.

Der Film hatte einen Acetalisierungsgrad von 1,0 Mol-%.

In Wasser bei einer Temperatur von 20°C löst sich der Film unter Rühren innerhalb von 3 min.

Im "geschlossene Flaschen-Test" zur Bestimmung der biologischen Abbaubarkeit nach Fischer*) zeigte die Sauerstoffzehrung nach 3 Tagen bei 20°C 49% BSBT.

Beispiel 14:

Warm/Kaltwasserlöslicher Film.

In einem ersten Vorversuch werden zur Bestimmung des Löslichkeitsverhaltens 100 g PVA mit einem Polymerisationsgrad von 1400 einem Verseifungsgrad von 88% wie bisher beschrieben mit 70 g Stärke in Gegenwart von 5g conc. HCl umgesetzt, bis eine klare Lösung entsteht.

Danach wird in einem 2. Vorversuch zur Bestimmung des Stärkeabbaus in einem analogen Verfahren das Verfahren ohne PVA an einer Probe mittels der Oxim-Titration nach H.Schulz et al. das Carbonyläquivalent bestimmt. Das gemessene Carbonyläquivalent beträgt 6800.

Danach wurde der Haupt-Reaktionsansatz wie folgt durchgeführt:

100 g Polyvinylalkohol, mit einem Polymerisationsgrad von 1000 und einem Verseifungsgrad von 88%, somit entsprechend 1,79 Vinylalkoholäquivalenten (VA-Äqu) werden mit 70g Stärke (Carbonyl-Äquivalentgewicht nach Abbau unter Reaktionsbedingungen = 6800), also mit 70/6800 = 0,01 Carbonyläquivalenten = [Carb-Äqu] unter Phosphorsäurekatalyse umgesetzt.

Das Mengenverhältnis Carb-Äqu: VA-Äqu wurde entsprechend der Formel

$$\frac{\text{Verseifungsgrad (Mol\%) PVA}}{2} - 43,4 = 0,6/100 \text{ VA-Äqu}$$

eingestellt.

Der Film hatte einen Acetalisierungsgrad von 1,0 Mol-%.

In Wasser bei einer Temperatur von 30°C löste sich der Film unter Rühren innerhalb von 3 min.

Im "geschlossene Flaschen-Test" zur Bestimmung der biologischen Abbaubarkeit nach Fischer[*]) zeigte die Sauerstoffzehrung nach 30 Tagen bei 20°C 49% BSBT.

In einem weiteren Versuch wird eine Glasflasche am Rand der Flaschenöffnung mit einer ca. 30 µm dicken Schicht des hergestellten Films beschichtet. Dazu wurde der Flaschenrand mehrere Male mit der PVA-Lösung wie sie als ausreagiertes Reaktionsgemisch nach genannter Verfahrensweise erhalten wurde, bestrichen und dann bei 80°C getrocknet.

Auf die so vorbehandelte Flasche konnte in einem üblichen Heiß-Siegelverfahren ein Aluminium-Foliendeckel aufgesiegelt werden, wodurch ein absolut flüssigkeitsdichter Verschluß entstand, der auch nach mehrwöchigem Stehen mit Milch als Füllgut in der Flasche noch dicht war. Der Foliendeckel ließ sich jederzeit leicht abziehen. Beim Auswaschen der Flasche in einer normalen Geschirrspülmaschine wurde der "Siegellack"-Film gänzlich entfernt.

Beispiel 15:

Warm/Kaltwasserlöslicher Film.

In einem 1. Vorversuch werden zur Bestimmung des Löslichkeitsverhaltens 100 g PVA der Type MOWIOL® 4-98 der Firma HOECHST mit einem Polymerisationsgrad 600 und einem Verseifungsgrad 98,4%, wie bisher beschrieben mit 900 g wasserlöslicher Stärke in Gegenwart von 5g conc. $H_3PO_4$ umgesetzt, bis eine klare Lösung entsteht.

Danach wird in einem 2. Vorversuch zur Bestimmung des Stärkeabbaus in einem analogen Verfahren an einer Probe mittels der Oxim-Titration nach H.Schulz et. al. das Carbonyläquivalent der unter Reaktionsbedingungen entstehenden abgebauten Stärke bestimmt. Es ergab sich ein Wert von 5200.

Danach wurde der Haupt-Reaktionsansatz wie folgt durchgeführt:

100 g Polyvinylalkohol, mit einem Polymerisationsgrad von 600 und einem Verseifungsgrad von 98,4%, somit entsprechend 1,79 Vinylalkoholäquivalenten (VA-Äqu) werden mit 900g Stärke (Carbonyl-Äquivalentgewicht nach Abbau unter Reaktionsbedingungen = 5200), also mit 900/5200 = 0,17 Carbonyläquivalenten = [Carb-Äqu] in Gegenwart von 5g HCl conc anstelle der Phosphorsäurekatalyse umgesetzt.

Der Film mit einer Dicke von 25 µm hatte einen Acetalisierungsgrad von 15,0 Mol-%.

In Wasser bei einer Temperatur von 30°C löste sich der Film unter Rühren innerhalb von 1 min.

Im "geschlossene Flaschen-Test" zur Bestimmung der biologischen Abbaubarkeit nach Fischer[*]) zeigte die Sauerstoffzehrung nach 30 Tagen bei 20°C 65% BSBT.

Vergleichsbeispiel 1 nach der Lehre gemäß der EP-A2-283180

Verfahren wie in Beispiel 1 angegeben, nur mit dem Unterschied, daß 75g PVA (Polymerisationsgrad 1000; Verseifungsgrad 98,5%) in 425 g Wasser mit 14,2 g 2-Benzaldehyd-Sulfonsäure-Na-Salz umgesetzt werden.

Der Film hat einen Acetalisierungsgrad von 7,7 Mol-%. In Wasser bei einer Temperatur von 20°C löst sich der Film unter Rühren innerhalb von 30 Sekunden.

Im "geschlossenen Flaschen-Test" zur Bestimmung der biologischen Abbaubarkeit nach Fischer werden nach 30 Tagen ledglich 25% BSTB erzielt.

Vergleichsbeispiel 2:

In ein Polyvinylalkoholacetal (mittlerer Polymerisationsgrad 1700; 15 Mol-% acetalisiert mit Acetaldehyd) werden

[*]) W.K.Fischer; Fette, Seifen, Anstrichmittel 65/1 (1963) 37 und Tenside Detergents 8/4 (1971) 182
Der GF-Test nach Fischer zeigt wegen der spezifischen Testbedingungen mit simultanem Substratabbau durch Veratmung neben Substratabbau durch Bildung von Mikroorganismen-körpereigener Substanz - bei 40% Abbau innerhalb von 30 Tagen eine biologische Abbaubarkeit entsprechend mehr als 80% im 3-Stunden Husmann-Test an.

50% wasserlösliche Stärke und 8% Nonylphenol-8-Äthylenoxid-Addukt in Gegenwart von Wasser zur Herstellung einer thermoplastischen Masse eingeknetet. Diese Masse wurde durch Strangextrusion in ein Stranggranulat umgewandelt und in einem zweiten Verfahrensschritt zu einem Film extrudiert.

In Wasser bei einer Temperatur von 20°C löst sich der Film unter Rühren innerhalb von 3 Minuten.

Der Film hat einen Acetalisierungsgrad von 7,7 Mol-%.

Im "geschlossene Flaschen-Test" zur Bestimmung der biologischen Abbaubarkeit nach Fischer[*] werden nach 30 Tagen lediglich 33% BSBT erreicht.

Gewerbliche Anwendbarkeit

Es werden wasserlösliche Filme, die erfindungsgemäße Vinylalkoholcopolymere enthalten, angegeben, deren Wasserlöslichkeit je nach gewünschter Lösungstemperatur einstellbar ist. Diese wasserlöslichen Filme werden als Verpackungsmittel sowie als Verpackungshilfsmittel, beispielsweise in Form von Siegellacken verwendet.

**Patentansprüche**

1. Vinylalkoholcopolymere, herstellbar durch säurekatalysierte Acetalisierungsreaktion von Polyvinylalkoholen mit einem Verseifungsgrad von 80 - 99,5 Mol%, mit Carbonylgruppen bzw. präsumtive Carbonylgruppen enthaltenden Naturstoffen oder deren Derivaten, ausgenommen solche auf Basis von Benzaldehydsulfonsäurederivaten.

2. Vinylalkoholcopolymere nach Anspruch 1, dadurch gekennzeichnet, daß der Verseifungsgrad zwischen 90 und 99 Mol% ist.

3. Vinylalkoholcopolymere nach Anspruch 1 oder 2, dadurch gekennzeichnet, daß der Carbonylgruppen- bzw. präsumtive Carbonylgruppen enthaltende Naturstoff ein Monosaccharid, ist.

4. Vinylalkoholcopolymere nach Anspruch 1 oder 2, dadurch gekennzeichnet, daß der Carbonylgruppen- bzw. präsumtive Carbonylgruppen enthaltende Naturstoff ein Disaccharid ist.

5. Vinylalkoholcopolymere nach Anspruch 1 oder 2, dadurch gekennzeichnet, daß der Carbonylgruppen- bzw. präsumtive Carbonylgruppen enthaltende Naturstoff ein Polysaccharid oder ein Abbauprodukt eines Polysaccharids ist.

6. Vinylalkoholcopolymere nach Anspruch 5, dadurch gekennzeichnet, daß das Polysaccharid Stärke bzw. ein aus Stärke durch Säurekatalyse hergestelltes, partiell hydrolysiertes Abbauprodukt mit verringertem Molekulargewicht ist.

7. Vinylalkoholcopolymere nach Anspruch 5, dadurch gekennzeichnet, daß das Polysaccharid ein aus Stärke durch Oxidationsreaktion hergestelltes, partielles Abbauprodukt ist.

8. Vinylalkoholcopolymere nach Anspruch 7, dadurch gekennzeichnet, daß die Oxidationsreaktion mittels Wasserstoffperoxid durchgeführt wird.

9. Vinylalkoholcopolymere nach Anspruch 5, dadurch gekennzeichnet, daß das Polysaccharid ein aus Stärke durch thermische und mechanische Belastung und dadurch eingeleitete Entknäulung der Stärkemoleküle, sowie durch Spaltung von Vernetzungsbrücken und partieller Dehydratation bzw. BrenzReaktionen hergestelltes Stärke-Abbauprodukt ist.

10. Vinylalkoholcopolymere nach Anspruch 5, dadurch gekennzeichnet, daß das Polysaccharid ein aus Stärke durch thermische und mechanische Belastung und dadurch eingeleitete Entknäulung der Stärkemoleküle sowie durch Spaltung von Vernetzungsbrücken und partieller Dehydratation bzw. Brenz-Reaktionen und chemisch-hydrolytischen Abbau in Anwesenheit saurer oder alkalischer Katalysatoren hergestelltes Stärke-Abbauprodukt ist, welches maximal die Hälfte des ursprünglichen, durchschnittlichen Molekulargewichtes der eingesetzten Stärke aufweist.

[*] W.K.Fischer; Fette, Seifen, Anstrichmittel 65/1 (1963) 37 und Tenside Detergents 8/4 (1971) 182
Der GF-Test nach Fischer zeigt wegen der spezifischen Testbedingungen mit simultanem Substratabbau durch Veratmung neben Substratabbau durch Bildung von Mikroorganismen-körpereigener Substanz - bei 40% Abbau innerhalb von 30 Tagen eine biologische Abbaubarkeit entsprechend mehr als 80% im 3-Stunden Husmann-Test an.

11. Verfahren zur Herstellung von Vinylalkoholcopolymeren gemäß einem der Ansprüche 1 - 10, dadurch gekennzeichnet, daß das Vinylalkoholcopolymer aus einem Polyvinylalkohol mit einem Verseifungsgrad von 80 - 99,5 Mol%, durch säurekatalysierte Acetalisierungsreaktion mit einem Carbonylgruppen bzw. präsumtive Carbonylgruppen enthaltenden Naturstoff oder dessen Derivat hergestellt wird.

12. Verwendung von Vinylalkoholcopolymeren nach einem der Ansprüche 1 - 10 zur Herstellung von Siegellacken.

13. Verwendung von Vinylalkoholcopolymeren nach einem der Ansprüche 1 - 10 in Gemischen mit bekannten polymeren Heißsiegellack-Komponenten.

14. Wasserlöslicher Film, enthaltend ein Vinylalkoholcopolymer gemäß einem der Ansprüche 1 - 10, dessen Löslichkeitsverhalten bei Temperaturen ab maximal 60 bis 80°C dadurch einstellbar ist, daß der Film aus einem Polyvinylalkohol mit einem mittleren Polymerisationsgrad in einem Bereich von 500 bis 2800 durch säurekatalysierte Reaktion mit einem Carbonylgruppen enthaltenden Naturstoff in einem Mengenverhältnis entsprechend der Anzahl an Carbonyläquivalenten pro 100 Vinylalkoholäquivalente des Polyvinylalkohols der Formel

$$\frac{\text{Verseifungsgrad (Mol\%) Polyvinylalkohol}}{2} - (47.6 \text{ bis } 49)$$

entspricht, herstellbar ist.

15. Wasserlöslicher Film, enthaltend ein Vinylalkoholcopolymer gemäß einem der Ansprüche 1 - 10, dessen Löslichkeitsverhalten bei Temperaturen ab maximal 40 bis 60°C dadurch einstellbar ist, daß der wasserlösliche Film aus einem Polyvinylalkohol mit einem mittleren Polymerisationsgrad in einem Bereich von 300 bis 1500 durch säurekatalysierte Reaktion mit einem Carbonylgruppen enthaltenden Naturstoff in einem Mengenverhältnis entsprechend der Anzahl an Carbonyläquivalenten pro 100 Vinylalkoholäquivalente des Polyvinylalkohols der Formel

$$\frac{\text{Verseifungsgrad (Mol\%) Polyvinylalkohol}}{2} - (44 \text{ bis } 47.5)$$

entspricht, herstellbar ist.

16. Wasserlöslicher Film, enthaltend ein Vinylalkoholcopolymer gemäß einem der Ansprüche 1 - 10, dessen Löslichkeitsverhalten bei Temperaturen ab maximal 20 bis 40°C dadurch einstellbar ist, daß der Film aus einem Polyvinylalkohol mit einem mittleren Polymerisationsgrad in einem Bereich von 200 bis 2700 durch säurekatalysierte Reaktion mit einem Carbonylgruppen enthaltenden Naturstoff in einem Mengenverhältnis entsprechend der Anzahl an Carbonyläquivalenten pro 100 Vinylalkoholäquivalente des Polyvinylalkohols der Formel

$$\frac{\text{Verseifungsgrad (Mol\%) Polyvinylalkohol}}{2} - (40 \text{ bis } 44)$$

entspricht, herstellbar ist.

17. Wasserlöslicher Film nach Anspruch 16, dadurch gekennzeichnet, daß er durch säurekatalysierte Acetalisierung eines Polyvinylalkohols mit einem Polymerisationsgrad im Bereich von 200 bis 1000 mit einem Naturstoff in einem Mengenverhältnis entsprechend der Anzahl an Carbonyläquivalenten gemäß der Formel

$$\frac{\text{Verseifungsgrad (Mol\%) Polyvinylalkohol}}{2} - (42.5 \text{ bis } 44)$$

eingestellt werden können, herstellbar ist.

18. Verfahren zur Herstellung eines wasserlöslichen Films gemäß einem der Ansprüche 14 - 17, dadurch gekennzeichnet, daß das Vinylalkoholcopolymer mit an sich bekannten Hydrophilierungsmitteln und Weichmachern in Granulatform versetzt wird und dieses Gemisch anschließend in einen Extruder übergeführt wird, in welchem es auf Fließtemperatur erhitzt und anschließend in geschmolzener Form einer Extruderaustrittsdüse zugeführt wird, wodurch ein Film oder Filmschlauch ausgebildet wird.

**19.** Verfahren zur Herstellung eines wasserlöslichen Films gemäß einem der Ansprüche 14 - 17, dadurch gekennzeichnet, daß das Vinylalkoholcopolymer in einem Extruder durch Umsetzung eines Polyvinylalkohols mit einem Carbonylgruppen bzw. präsumtive Carbonylgruppen enthaltenden Naturstoff oder dessen Derivat unter Säurekatalyse hergestellt und in demselben Extruder in Gegenwart an sich bekannter Plastifizierungsmittel und Additive einer Extruderaustrittsdüse zugeführt wird, sodaß ein Film oder Filmschlauch ausgebildet wird.

**20.** Verfahren zur Herstellung eines wasserlöslichen Films gemäß Anspruch 19, dadurch gekennzeichnet, daß ein Extruder mit Entgasungsstrecke zur Entfernung des im Granulierungsprozess entstehenden Wasserdampfes verwendet wird.

**21.** Verwendung eines wasserlöslichen Films gemäß einem der Ansprüche 13 bis 16 für Verpackungsmaterialien.

**22.** Verfahren zur Herstellung eines Granulates, bestehend aus einem Vinylalkoholcopolymer gemäß einem der Ansprüche 1 - 10, dadurch gekennzeichnet, daß die säurekatalysierte Umsetzung des Vinylalkoholcopolymers mit Carbonylgruppen bzw. präsumtive Carbonylgruppen enthaltenden Naturstoffen in einem Extruder durchgeführt wird, sodaß entsprechend der Extruderdüsenform ein Granulat.

## Claims

**1.** Vinyl alcohol copolymers which can be prepared by an acid catalysed acetalation reaction of polyvinyl alcohols with a degree of saponification of 80 to 99.5 mol %, with natural products containing carbonyl groups or presumptive carbonyl groups or their derivatives, excepting those based on benzaldehyde sulphonic acid derivatives.

**2.** Vinyl alcohol copolymers according to Claim 1, characterised in that the degree of saponification is between 90 and 99 mol %.

**3.** Vinyl alcohol copolymers according to Claim 1 or 2, characterised in that the natural product containing carbonyl groups or presumptive carbonyl groups is a monosaccharide.

**4.** Vinyl alcohol copolymers according to Claim 1 or 2, characterised in that the natural product containing carbonyl groups or presumptive carbonyl groups is a disaccharide.

**5.** Vinyl alcohol copolymers according to Claim 1 or 2, characterised in that the natural product containing carbonyl groups or presumptive carbonyl groups is a polysaccharide or a degradation product of a polysaccharide.

**6.** Vinyl alcohol copolymers according to Claim 5, characterised in that the polysaccharide is starch or a partially hydrolysed degradation product with reduced molecular weight produced from starch by acid catalysis.

**7.** Vinyl alcohol copolymers according to Claim 5, characterised in that the polysaccharide is a partial degradation product produced from starch by an oxidation reaction.

**8.** Vinyl alcohol copolymers according to Claim 7, characterised in that the oxidation reaction is carried out using hydrogen peroxide.

**9.** Vinyl alcohol copolymers according to Claim 5, characterised in that the polysaccharide is a starch degradation product produced from starch by thermal and mechanical loading and uncoiling of the starch molecules induced thereby, and also cleavage of cross-linking bridges and partial dehydration or pyrolyzing reactions.

**10.** Vinyl alcohol copolymers according to Claim 5, characterised in that the polysaccharide is a starch degradation product produced from starch by thermal and mechanical loading and uncoiling of the starch molecules induced thereby, and also cleavage of cross-linking bridges and partial dehydration or pyrolyzing reactions and chemical-hydrolytic degradation in the presence of acid or alkaline catalysts, which starch degradation product has at maximum half the original average molecular weight of the starch used.

**11.** A method of preparing vinyl alcohol copolymers according to any one of Claims 1 to 10, characterised in that the vinyl alcohol copolymer is prepared from a polyvinyl alcohol with a degree of saponification of 80 to 99.5 mol % by acid catalysed acetalation reaction with a natural product containing carbonyl groups or presumptive carbonyl groups or its derivative.

12. Use of vinyl alcohol copolymers according to any one of Claims 1 to 10 for the preparation of sealing lacquers.

13. Use of vinyl alcohol copolymers according to any one of Claims 1 to 10 in mixtures with known polymeric heat sealing lacquer components.

14. A water-soluble film containing a vinyl alcohol copolymer according to any one of Claims 1 to 10, the solubility behaviour of which can be adjusted at temperatures from a maximum of 60 to 80°C in that the film can be prepared from a polyvinyl alcohol with an average degree of polymerisation within a range of 500 to 2800 by acid catalysed reaction with a natural product containing carbonyl groups, the proportion of which, corresponding to the number of carbonyl equivalents per 100 vinyl alcohol equivalents of the polyvinyl alcohol, corresponds to the formula

$$\frac{\text{degree of saponification (mol \%) polyvinyl alcohol}}{2} \text{ - (47.6 to 49)}$$

15. A water-soluble film containing a vinyl alcohol copolymer according to any one of Claims 1 to 10, the solubility behaviour of which can be adjusted at temperatures from a maximum of 40 to 60°C in that the water-soluble film can be prepared from a polyvinyl alcohol with an average degree of polymerisation within a range of 300 to 1500 by acid catalysed reaction with a natural product containing carbonyl groups, the proportion of which, corresponding to the number of carbonyl equivalents per 100 vinyl alcohol equivalents of the polyvinyl alcohol, corresponds to the formula

$$\frac{\text{degree of saponification (mol \%) polyvinyl alcohol}}{2} \text{ - (44 to 47.5)}$$

16. A water-soluble film containing a vinyl alcohol copolymer according to any one of Claims 1 to 10, the solubility behaviour of which can be adjusted at temperatures from a maximum of 20 to 40°C in that the film can be prepared from a polyvinyl alcohol with an average degree of polymerisation within a range of 200 to 2700 by acid catalysed reaction with a natural product containing carbonyl groups, the proportion of which, corresponding to the number of carbonyl equivalents per 100 vinyl alcohol equivalents of the polyvinyl alcohol, corresponds to the formula

$$\frac{\text{degree of saponification (mol \%) polyvinyl alcohol}}{2} \text{ - (40 to 44)}$$

17. A water-soluble film according to Claim 16, characterised in that it can be prepared by acid catalysed acetalation of a polyvinyl alcohol with a degree of polymerisation within a range of 200 to 1000 with a natural product, the proportion of which, corresponding to the number of carbonyl equivalents, can be adjusted in accordance with the formula

$$\frac{\text{degree of saponification (mol \%) polyvinyl alcohol}}{2} \text{ - (42.5 to 44)}$$

18. A method of preparing a water-soluble film according to any one of Claims 14 to 17, characterised in that the vinyl alcohol copolymer is mixed with per se known hydrophilising agents and plasticisers in granular form and this mixture is subsequently transferred to an extruder in which it is heated to flow temperature and, subsequently, is fed in molten form to an extruder outlet die, thereby forming a film or film tubing.

19. A method of preparing a water-soluble film according to any one of Claims 14 to 17, characterised in that the vinyl alcohol copolymer is prepared in an extruder by reacting a polyvinyl alcohol with a natural product containing carbonyl groups or presumptive carbonyl groups or its derivative by acid catalysis, and in this extruder it is fed in the presence of per se known plasticisers and additives to an extruder outlet die so that a film or film tubing is formed.

20. A method of preparing a water-soluble film according to Claim 19, characterised in that an extruder is used having an degassing section for removing the water vapour formed in the granulation process.

21. Use of a water-soluble film according to any one of Claims 13 to 16 for packaging materials.

22. A method of preparing a granular material, comprising a vinyl alcohol copolymer according to any one of Claims 1 to 10, characterised in that the acid catalysed reaction of the vinyl alcohol copolymer is carried out with natural products containing carbonyl groups or presumptive carbonyl groups in an extruder so that a granular material is produced depending on the shape of the extrusion die.

**Revendications**

1. Copolymère d'alcool vinylique. susceptibles d'être préparés par une réaction d'acétalysation catalysée par les acides d'alcools polyvinyliques ayant un degré de saponification de 80-99,5 moles % avec des produits naturels contenant des groupes carbonyles ou des groupes carbonyles présomptifs ou leurs dérivés, à l'exception de ceux qui sont à base de dérivés de l'acide benzaldéhyde sulfonique.

2. Copolymères d'alcool vinylique selon la revendication 1, caractérisés en ce que le degré de saponification est compris entre 90 et 99 moles %.

3. Copolymères d'alcool vinylique selon la revendication 1 ou 2. caractérisés en ce que le produit naturel contenant des groupes carbonyles et/ou des groupes carbonyles présomptifs est un monosaccharide.

4. Copolymères d'alcool vinylique selon la revendication 1 ou 2, caractérisés en ce que le produit naturel comprenant des groupes carbonyles et/ou des groupes carbonyles présomptifs est un disaccharide.

5. Copolymères d'alcool vinylique selon la revendication 1 ou 2, caractérisés en ce que le produit naturel comprenant des groupes carbonyles et/ou des groupes carbonyles présomptifs est un polysaccharide ou un produit de dégradation d'un polysaccharide.

6. Copolymères d'alcool vinylique selon la revendication 5, caractérisés en ce que le polysaccharide est un amidon ou bien un produit de dégradation de l'amidon partiellement hydrolysé obtenu par catalyse acide d'un poids moléculaire plus faible.

7. Copolymères d'alcool vinylique selon la revendication 5, caractérisés en ce que le polysaccharide est un produit de dégradation partielle d'un amidon obtenu par réaction d'oxydation.

8. Copolymères d'alcool vinylique selon la revendication 7, caractérisés en ce que la réaction d'oxydation est effectuée à l'aide de peroxyde d'hydrogène.

9. Copolymères d'alcool vinylique selon la revendication 5, caractérisés en ce que le polysaccharide est un produit de dégradation de l'amidon obtenu par application de contraintes thermiques et mécaniques et le désenchevêtrement des molécules d'amidon ainsi déclenché, ainsi que par la coupure des ponts de réticulation et une déshydratation partielle, et/ou de réaction de pyrolyse.

10. Copolymères d'alcool vinylique selon la revendication 5, caractérisés en ce que le polysaccharide est un produit de dégradation d'amidon préparé à partir d'amidon par application de contraintes mécaniques et thermiques et donc désenchevêtrement ainsi déclenché des molécules d'amidon, ainsi que par coupure des ponts de réticulation et déshydratation partielle, et/ou réactions de pyrolyse et dégradation chimique hydrolytique en présence de catalyseurs acides ou alcalins, ce produit de dégradation présentant au maximum la moitié de la masse moléculaire moyenne initiale de l'amidon introduit.

11. Procédé de préparation de copolymères d'alcool vinylique selon l'une quelconque des revendications 1 à 10, caractérisé en ce que le copolymère d'alcool vinylique est préparé à partir d'un alcool polyvinylique présentant un degré de saponification de 80 à 99,5 moles %, par réaction d'acétalysation catalysée par les acides avec un produit naturel ou ses dérivés comprenant des groupes carbonyles ou des groupes carbonyles présomptifs.

12. Utilisation de copolymères d'alcool vinylique selon l'une quelconque des revendications 1 à 10 pour la fabrication de laque thermoscellable.

13. Préparation de copolymères d'alcool vinylique selon l'une quelconque des revendications 1 à 10, en mélange avec des constituants connus de laque thermoscellable de polymères.

14. Film hydrosoluble, comprenant un copolymère d'alcool vinylique selon l'une quelconque des revendications 1 à 10, dont le comportement de solubilité, à partir d'une température maximum de 60 à 80°C, est ajustable en ce que le film est susceptible d'être préparé à partir d'un alcool polyvinylique ayant un degré de polymérisation moyen compris entre 500 et 2800 par réaction catalysée par les acides avec un produit naturel comprenant des groupes carbonyles en des proportions correspondant au nombre d'équivalents de carbonyle par cent équivalents d'alcool vinylique de l'alcool polyvinylique correspondant à la formule : Degré de saponification (moles %) du polyvinylalcool

$$\frac{\text{Degré de saponification (moles \%) du polyvinylalcool}}{2} - (47,6 \text{ à } 49)$$

15. Film hydrosoluble, comprenant un copolymère d'alcool vinylique selon l'une quelconque des revendications 1 à 10, dont le comportement de solubilité, à des températures à partir de au maximum 40 à 60°C, est réglable en ce que le film hydrosoluble est susceptible d'être préparé à partir d'un alcool polyvinylique présentant un degré de polymérisation moyen compris entre 300 et 1500 par réaction catalysée par les acides avec un produit naturel comprenant des groupes carbonyles en des proportions correspondant au nombre d'équivalents de carbonyle par cent équivalents d'alcool vinylique de l'alcool polyvinylique correspondant à la formule :

$$\frac{\text{Degré de saponification (moles \%) du polyvinylalcool}}{2} - (44 \text{ à } 47,5)$$

16. Film hydrosoluble comprenant un copolymère d'alcool vinylique selon l'une quelconque des revendications 1 à 10, dont le comportement de solubilité, à des températures à partir de au maximum 20 à 40°C est réglable en ce que le film est susceptible d'être préparé à partir d'un alcool polyvinylique présentant un degré de polymérisation moyen compris entre 200 et 2700 par réaction catalysée par les acides avec un produit naturel comprenant des groupes carbonyle en des proportions correspondant au nombre d'équivalents de carbonyle par cent équivalents d'alcool vinylique de l'alcool polyvinylique correspondant à la formule :

$$\frac{\text{Degré de saponification (moles \%) du polyvinylalcool}}{2} - (40 \text{ à } 44)$$

17. Film hydrosoluble selon la revendication 16, caractérisé en ce qu'il est susceptible d'être préparé par acétalysation catalysée par les acides d'un alcool polyvinylique présentant un degré de polymérisation compris entre 200 et 1000 avec un produit naturel en des proportions correspondant au nombre d'équivalents de carbonyle selon la formule :

$$\frac{\text{Degré de saponification (moles \%) du polyvinylalcool}}{2} - (42,5 \text{ à } 44)$$

18. Procédé de préparation d'un film hydrosoluble selon l'une quelconque des revendications 14 à 17, caractérisé en ce que le copolymère d'alcool vinylique est mélangé avec des agents hydrophilisants et des plastifiants eux-mêmes connus sous forme granulée et que ce mélange est ensuite transféré dans une extrudeuse dans laquelle il est chauffé à la température de fluage et ensuite est envoyé dans une buse d'extrusion sous forme fondue, ce qui permet d'obtenir la formation d'un film ou d'un tube à base de ce film.

19. Procédé de préparation d'un film hydrosoluble selon l'une quelconque des revendications 14 à 17, caractérisé en ce que le copolymères d'alcool vinylique est préparé dans une extrudeuse par transformation d'un alcool vinylique à l'aide d'un produit naturel comportant des groupes carbonyle ou des groupes carbonyle présomptifs ou leurs dérivés, dans des conditions de catalyse acide. et est amené dans la même extrudeuse vers une buse d'extrusion en présence d'agents plastifiants et des additifs connus eux-mêmes, de manière à former un film ou un tube à base de ce film.

20. Procédé de préparation d'un film hydrosoluble selon la revendication 19, caractérisé en ce que l'on utilise une extrudeuse comportant une section de dégazage pour l'élimination de la vapeur d'eau libérée pendant l'opération de granulation.

21. Utilisation d'un film hydrosoluble selon l'une quelconque des revendications 13 à 16, comme matériau d'emballage.

22. Procédé de préparation d'un granulé consistant en un copolymères d'alcool vinylique selon l'une quelconque des revendications 1 à 10, caractérisé en ce que la transformation catalysée par les acides du copolymère d'alcool vinylique avec des produits naturels comportant des groupes carbonyle ou des groupes carbonyle présomptifs est effectué dans une extrudeuse de sorte qu'on obtient un granulé correspondant à la forme de la buse d'extrudeuse.